# EUROPÄISCHE PATENTSCHRIFT

(11) **EP 1 315 687 B1**
(45) Veröffentlichungstag und Bekanntmachung des Hinweises auf die Patenterteilung: **18.08.2004**
(21) Anmeldenummer: 01971995.4
(22) Anmeldetag: 03.09.2001
(51) Int. Cl.: C04B 41/50, C04B 41/48

(54) **FORMKÖRPER MIT EINER TONMINERALISCHEN BESCHICHTUNG**
SHAPED BODY WITH A MINERAL CLAY COATING
CORPS MOULE COMPORTANT UN REVETEMENT MINERAL ARGILEUX

(30) Priorität: 04.09.2000 DE 10043452
(43) Veröffentlichungstag der Anmeldung: 04.06.2003
(73) Patentinhaber: BASF AKTIENGESELLSCHAFT, 67056 Ludwigshafen (DE)
(72) Erfinder: SANDOR, Mario, 67283 Obrigheim (DE); SCHWARTZ, Manfred, 67227 Frankenthal (DE); BECHERT, Bertold, 67269 Grünstadt (DE); WIESE, Harm, 69121 Heidelberg (DE)
(74) Vertreter: Thalhammer, Wolfgang, Dr.
(86) Internationale Anmeldenummer: PCT/EP2001/010132
(87) Internationale Veröffentlichungsnummer: WO 2002/020427

(56) Entgegenhaltungen:
- DE-A- 19 628 035
- DE-A- 19 810 052
- US-A- 5 482 737

## Beschreibung

Die vorliegende Erfindung betrifft einen Formkörper, einen Grundkörper aus einem zementgebundenen mineralischen Material, das gegebenenfalls mit Polymerisaten modifiziert ist, und eine auf wenigstens einer der Hauptflächen des Grundkörpers befindliche mineralische Beschichtung umfasst, sowie ein Verfahren zu seiner Herstellung.

Formkörper aus einem zementgebundenen mineralischen Material, d.h. Betonformkörper und Bauelemente aus Beton werden in vielen Bereichen der Bauindustrie als Baustoffe eingesetzt, z.B. als Betonröhren für Regen- und Abwasser, Randsteine, Bodenplatten, Sokkelplatten, Treppenstufen, Wandbauteile und Betondachsteine.

Betondachsteine sind dachziegelförmige Formkörper aus Beton, die in jüngerer Zeit verstärkt anstelle der bisher üblichen Dachziegel aus Ton zum Decken von Dächern eingesetzt werden.

Betonformkörper, insbesondere Betondachsteine, werden durch Formgebung, in der Regel durch Strangpreß-Verfahren aus plastischen, nicht abgebundenen Betonmassen hergestellt. Zur Farbgebung enthalten diese Betonmassen in der Regel ein anorganisches Buntpigment, beispielsweise Eisenoxid-Rotpigmente oder Eisenoxid-Schwarzpigmente.

Formkörper aus Beton sind vergleichbaren Formkörpern aus Ton aufgrund ihrer höheren mechanischen Festigkeit überlegen. Ein weiterer Vorteil von Betonformkörpern gegenüber herkömmlichen Formkörpern aus Ton ist der weitaus günstigere Herstellungspreis. Allerdings ist das Aussehen von Betonformkörpern aufgrund einer rauheren Oberfläche häufig nicht zufriedenstellend. Zudem tritt bei Bewitterung das in ihnen enthaltene Calcium teilweise an die Oberfläche und führt dort zu unschönen Ausblühungen. Die rauhe Oberfläche der Betonformkörper fördert die Erosion und erleichtert insbesondere den unerwünschten Befall mit pflanzlichen Organismen, wie Algen, Flechten und Moosen.

Während in jüngerer Zeit das Problem des witterungsbedingten Ausblühens durch Behandlung der Oberfläche mit Beschichtungsmitteln auf Basis wässriger Polymerdispersionen weitgehend gelöst werden konnte, fehlt es an wirtschaftlichen Lösungen zur Herstellung von Betonformkörpern, insbesondere Betondachsteinen mit glatten Oberflächen.

In der GB-A 2,030,890 wurde vorgeschlagen, Betondachsteine, die nach dem Strangpressverfahren hergestellt werden, mit einer zementgebundenen mineralischen Beschichtung zu versehen, die im Wesentlichen Zement, Wasser und Pigmente enthält. Die Beschichtung wird in der Regel auf den nach einem Strangpreß-Verfahren frisch hergestellten, noch nicht abgebundenen Betondachsteinrohling (sogenannter "grüner" Betondachstein) durch Extrudieren oder Aufwalzen aufgebracht. Die Beschichtungen führen zu einer glatteren Oberfläche des Betondachsteins. Die Beschichtungen haben allerdings den Nachteil, dass sie leicht abplatzen. Zudem sind sie aufgrund des hohen Zement-Anteils unwirtschaftlich.

Die DE-A 3932573 beschreibt Betondachsteine, die mit einer mineralischen Beschichtung versehen sind, welche neben Zement als Bindemittel, Feinstsand als Zuschlag und anorganischen Pigmenten ein zementverträgliches Polymer enthält.

Die zementhaltigen Beschichtungen des Standes der Technik haben den Nachteil, dass sie leicht abplatzen. Die Verarbeitung der zementhaltigen Beschichtungsmittel ist oftmals problematisch. Zudem sind sie aufgrund des hohen Zement-Anteils unwirtschaftlich. Ihr Aussehen ist insbesondere im Vergleich zu konventionellen Tonziegeln nicht immer zufriedenstellend.

Der vorliegenden Erfindung liegt die Aufgabe zugrunde, Formkörper auf Basis mineralischer Bestandteile bereitzustellen, die die mechanische Festigkeit von Betonförmkörpern aufweisen und gleichzeitig das ansprechende Erscheinungsbild und die witterungsbeständigkeit von Formkörpern aus tonkeramischen Werkstoffen aufweisen. Diese Aufgabe wird vom Stand der Technik nur unzureichend gelöst.

Eigene Versuche der Anmelderin haben gezeigt, dass Beschichtungen aus Ton diese Probleme ebenfalls nur unzureichend lösen. Zwar werden auf diese Weise Beschichtungen mit glatter Oberfläche erhalten, jedoch ist die Beschichtung nur begrenzt witterungsbeständig. So vermag sie einerseits das Ausblühen nicht wirksam zu verhindern. Andererseits lassen sich diese Beschichtungen nicht mit einem konventionellen Ausblühschutz auf Basis einer polymergebundenen Beschichtung versehen, da diese auf Beschichtungen aus Ton nicht haftet.

Überraschenderweise können diese Probleme dadurch gelöst werden, dass man den Betongrundkörper mit einer Beschichtung auf Basis von Ton versieht, die mit Polymerisaten modifiziert ist, d.h. die neben den tonmineralischen Bestandteilen wenigstens ein fein verteiltes Polymerisat enthält.

Die vorliegende Erfindung betrifft daher Formkörper aus einem Grundkörper aus einem zementgebundenen mineralischen Material, das gegebenenfalls mit Polymerisaten modifiziert ist, und einer auf wenigstens einer der Hauptflächen des Grundkörpers befindlichen mineralischen Beschichtung aus einer polymermodifizierten mineralischen Masse, die wenigstens ein Tonmineral als Hauptbestandteil und 0,2 bis 20 Gew.-Teile, bezogen auf 100 Gew.-Teile mineralische Bestandteile der Beschichtung, wenigstens eines in der mineralischen Masse verteiltes, filmbildendes Polymerisat enthält.

Derartige Formkörper sind insbesondere als Dachbausteine von Interesse. Unter Dachbausteinen versteht man hier neben den herkömmlichen Dachpfannen auch Ortgangsteine, Firststeine, Stufensteine, Entlüftungssteine und andere zum Decken von Dächern verwendete Dachelemente aus Ton.

Die mineralische Masse, welche die Beschichtung bildet, besteht im wesentlichen aus mineralischen Bestandteilen, die als Hauptbestandteil, d.h. in Mengen > 50 Gew.-%, insbesondere > 80 Gew.-%, bezogen auf die mineralischen Bestandteile der Masse, wenigstens ein Tonmineral wie Kaolinit, Illit, Halloysit und Montmorillonit sowie gegebenenfalls davon verschiedene Silikate, Kieselsäuren, Alumosilikate wie Feldspäte, Calciumcarbonat, Quarzsand etc. als Nebenbestandteile enthalten. Derartige Massen sind im Handel als Tone erhältlich. Eine bevorzugte Ausführungsform der Erfindung betrifft einen Formkörper auf Basis von Illitischem Ton.

Die erfindungsgemäß zur Modifizierung der Tonmineralien-haltigen Beschichtung eingesetzten Polymerisate sind filmbildend. Hierunter versteht man, dass die Polymerisatteilchen des filmbildenden Polymerisats bei einer Temperatur, die unterhalb der Herstellungstemperatur des Formkörpers liegt, zu einem polymeren Film zerfließen. Die Temperatur, oberhalb derer eine Filmbildung auftritt, wird auch als Mindestfilmbildetemperatur (MFT) bezeichnet.

Eine gleichmäßige Filmbildung des bei der Herstellung des Formkörpers verwendeten hydrophoben Polymerisats ist in der Regel dann gewährleistet, wenn die Glasübergangstemperatur T_{g} des Polymerisats unterhalb 80°C, vorzugsweise unterhalb 50°C liegt. Unter der Glasübergangstemperatur wird hier die gemäß ASTM D3418-82 durch Differentialthermoanalyse (DSC) ermittelte "mid point temperature" verstanden (siehe auch Zosel, Farbe und Lack 82 (1976), S. 125-134 sowie DIN 53765). Für eine hinreichende Festigkeit der erfindungsgemäßen Beschichtung ist es von Vorteil, wenn die Glasübergangstemperatur des Polymeren wenigstens -20°C und insbesondere wenigstens 0°C beträgt. Im Hinblick auf ihre Elastizität ist es außerdem günstig, wenn die Glasübergangstemperatur Tg einen Wert von 50°C, insbesondere 30°C, nicht überschreitet. Die Glasübergangstemperatur von Polymerisaten, die aus ethylenisch ungesättigten Monomeren aufgebaut sind, kann in bekannter Weise über die Monomerzusammensetzung gesteuert werden (T.G. Fox, Bull. Am. Phys. Soc. (Ser. II) 1, 123 [1956] und Ullmanns Encyclopedia of Industrial Chemistry 5. Auflage, Vol. A21, Weinheim (1989) S. 169).

Um eine ausreichende Festigkeit der Beschichtung zu erreichen, ist es erforderlich, dass sie wenigstens 0,2 Gew.-Teile, vorzugsweise wenigstens 0,5 Gew.-Teile und insbesondere wenigstens 1 Gew.-Teil hydrophobes, filmbildendes Polymerisat, bezogen auf 100 Gew.-Teile mineralische Bestandteile der Beschichtung, enthält. Vorzugsweise enthält die mineralische Masse, welche die Beschichtung bildet, nicht mehr als 15 Gew.-Teile, insbesondere nicht mehr als 10 Gew.-Teile und besonders bevorzugt nicht mehr als 5 Gew.-Teile des hydrophoben, filmbildenden Polymerisats, bezogen auf 100 Gew.-Teile mineralische Bestandteile in der Masse.

Erfindungsgemäß ist das verwendete Polymerisat hydrophob. Derartige Polymersate sind dadurch gekennzeichnet, dass sie in Wasser unlöslich sind und ihre Polymerfilme nur eine geringe Wasseraufnahme, d.h. unterhalb 40 g/100 g Polymerfilm, insbesondere unterhalb 30 g/100g Polymerfilm, zeigen. Typische hydrophobe Polymerisate sind aus ethylenisch ungesättigten Monomeren M aufgebaut, die in der Regel wenigstens 80 Gew.-%, insbesondere wenigstens 90 Gew.-%, ethylenisch ungesättigte Monomere A mit einer Wasserlöslichkeit < 60 g/l und insbesondere < 30 g/l (25°C und 1 bar) umfassen, wobei bis zu 30 Gew.-%, z.B. 5 bis 25 Gew.-% der Monomere A durch Acrlynitril und/oder Methacrylnitril ersetzt sein können. Daneben enthalten die Monomere A noch 0,5 bis 20 Gew.-% von den Monomeren A verschiedene Monomere B. Hier und im Folgenden sind alle Mengenangaben für Monomere in Gew.-% auf 100 Gew.-% Monomere M bezogen.

Monomere A sind in der Regel einfach ethylenisch ungesättigt oder konjugierte Diolefine. Beispiele für Monomere A sind:
- Ester einer α,β-ethylenisch ungesättigten C₃-C₆-Monocarbonsäure oder C₄-C₈-Dicarbonsäure mit einem C₁-C₁₀-Alkanol. Vorzugsweise handelt es sich dabei um Ester der Acrylsäure oder Methacrylsäure, wie Methyl(meth)acrylat, Ethyl(meth)acrylat, n-Butyl(meth)acrylat, t-Butyl(meth)acrylat, 2-Ethylhexyl(meth)acrylat etc.;
- vinylaromatische Verbindungen, wie Styrol, 4-Chlorstyrol, 2-Methylstyrol etc.;
- Vinylester aliphatischer Carbonsäuren mit vorzugsweise 1 bis 10 C-Atomen, wie Vinylacetat, Vinylpropiat, Vinyllaurat, Vinylstearat, Versaticsäurevinyl-ester etc.;
- Olefinen, wie Ethylen oder Propylen;
- konjugierten Diolefinen, wie Butadien oder Isopren;
- Vinylchlorid oder Vinylidenchlorid.

Bevorzugte filmbildende Polymerisate sind ausgewählt unter den nachfolgend aufgeführten Polymerklassen I bis IV:
I) Copolymerisaten, die als Monomer A Styrol und wenigstens einen C₁-C₁₀-Alkylester der Acrylsäure und gegebenenfalls einen oder mehrere C₁-C₁₀-Alkylester der Methacrylsäure einpolymerisiert enthalten;
II) Copolymerisaten, die als Monomer A Styrol und wenigstens ein konjugiertes Dien sowie gegebenenfalls (Meth)acrylsäureester von C₁-C₈-Alkanolen, Acrylnitril und/oder Methacrylnitril einpolymerisiert enthalten;
III) Copolymerisaten, die als Monomere A Methylacrylat, wenigstens einen C₁-C₁₀-Alkylester der Acrylsäure und gegebenenfalls einen C₂-C₁₀-Alkylester der Methacrylsäure einpolymerisiert enthalten;
IV) Copolymerisaten, die als Monomer A wenigstens einen Vinylester einer aliphatischen Carbonsäure mit 2 bis 10 C-Atomen und wenigstens ein C₂-C₆-Olefin sowie gegebenenfalls einen oder mehrere C₁-C₁₀-Alkylester der Acrylsäure und/oder der Methacrylsäure einpolymerisiert enthalten.

Typische C₁-C₁₀-Alkylester der Acrylsäure in den Copolymerisaten der Klasse i bis iv sind Ethylacrylat, n-Butylacrylat, tert.-Butylacrylat, n-Hexylacrylat und 2-Ethylhexylacrylat.

Typische Copolymerisate der Klasse I enthalten als Monomere A 20 bis 80 Gew.-% und insbesondere 30 bis 70 Gew.-% Styrol und 20 bis 80 Gew.-%, insbesondere 30 bis 70 Gew.-%, wenigstens eines C₁-C₁₀-Alkylesters der Acrylsäure wie n-Butylacrylat, Ethylacrylat oder 2-Ethylhexylacrylat, jeweils bezogen auf die Gesamtmenge der Monomere A.

Typische Copolymerisate der Klasse II enthalten als Monomere A, jeweils bezogen auf die Gesamtmenge der Monomere A, 30 bis 85 Gew.-%, vorzugsweise 40 bis 80 Gew.-% und besonders bevorzugt 50 bis 75 Gew.-% Styrol und 15 bis 70 Gew.-%, vorzugsweise 20 bis 60 Gew.-% und besonders bevorzugt 25 bis 50 Gew.-% Butadien wobei 5 bis 20 Gew.-% der vorgenannten Monomere A durch (Meth)acrylsäureestern von C₁-C₈-Alkanolen und/oder durch Acrylnitril oder Methacrylnitril ersetzt sein könnnen.

Typische Copolymerisate der Klasse III enthalten als Monomere A, jeweils bezogen auf die Gesamtmenge der Monomere A, 20 bis 80 Gew.-%, vorzugsweise 30 bis 70 Gew.-% Methylmethacrylat und mindestens ein weiteres, vorzugsweise ein oder zwei weitere Monomere, ausgewählt unter Acrylsäureestern von C₁-C₁₀-Alkanolen, insbesondere n-Butylacrylat, 2-Ethylhexylacrylat und Ethylacrylat und gegebenenfalls einen Methacrylsäureester eines C₂-C₁₀-Alkanols in einer Gesamtmenge von 20 bis 80 Gew.-% und vorzugsweise 30 bis 70 Gew.-% einpolymerisiert.

Typische Copolymerisate der Klasse IV enthalten als Monomere A, jeweils bezogen auf die Gesamtmenge der Monomere A, 30 bis 90 Gew.-%, vorzugsweise 40 bis 80 Gew.-% und besonders bevorzugt 50 bis 75 Gew.-% einen Vinylester einer aliphatischen Carbonsäure, insbesondere Vinylacetat und 10 bis 70 Gew.-%, vorzugsweise 20 bis 60 Gew.-% und besonders bevorzugt 25 bis 50 Gew.-% eines C₂-C₆-Olefins, insbesondere Ethylen und gegebenenfalls ein oder zwei weitere Monomere, ausgewählt unter (Meth)acrylsäureestern von C₁-C₁₀-Alkanolen in einer Menge von 1 bis 15 Gew.-% einpolymerisiert.

Unter den vorgenannten Polymerisaten sind die Polymerisate der Klasse I besonders geeignet.

Als Monomere B kommen grundsätzlich alle Monomere in Betracht, die von den vorgenannten Monomeren verschieden und mit den Monomeren A copolymerisierbar sind. Derartige Monomere sind dem Fachmann bekannt und dienen in der Regel der Modifizierung der Eigenschaften des Polymerisats.

Bevorzugte Monomere B sind ausgewählt sind unter monoethylenisch ungesättigten Mono- und Dicarbonsäuren mit 3 bis 8 C-Atomen, insbesondere Acrylsäure, Methacrylsäure, Itaconsäure, deren Amiden wie Acrylamid und Methacrylamid, deren N-Alkylolamiden wie N-Methylolacrylamid und N-Methylolmethacrylamid, deren Hydroxy-C₁-C₄-alkylestern wie 2-Hydroxyethylacrylat, 2- und 3-Hydroxypropylacrylat, 4-Hydroxybutylacrylat 2-Hydroxyethylmethacrylat, 2-und 3-Hydroxypropylmethacrylat, 4-Hydroxybutylmethacrylat und monoethylenisch ungesättigten Monomeren mit Oligoalkylenoxid-Ketten vorzugsweise mit Polyethylenoxidketten mit Oligomerisierungsgraden vorzugsweise im Bereich von 2 bis 200, z.B. Monovinyl- und Monoallylether von Oligoethylenglykolen sowie Ester der Acrylsäure, der Maleinsäure oder der Methacrylsäure mit Oligoethylenglykolen.

Der Anteil der Monomere mit Säuregruppen beträgt vorzugweise nicht mehr als 10 Gew.-% und insbesondere nicht mehr als 5 Gew.-%, z.B. 0,1 bis 5 Gew.-%, bezogen auf die Monomere M. Der Anteil an Hydroxyalkylestern und Monomeren mit Oligoalkylenoxidketten liegt, sofern enthalten, vorzugsweise im Bereich von 0,1 bis 20 Gew.-% und insbesondere im Bereich von 1 bis 10 Gew.-%, bezogen auf die Monomere M. Der Anteil der Amide und N-Alkylolamide liegt, sofern enthalten, vorzugsweise im Bereich von 0,1 bis 5 Gew.-%.

Neben den vorgenannten Monomeren B kommen als weitere Monomere B auch vernetzende Monomere, wie Glycidylether und -ester, z.B. Vinyl-, Allyl- und Methallylglycidylether, Glycidylacrylat und -methacrylat, die Diacetonylamide der obengenannten ethylenisch ungesättigten Carbonsäuren, z.B. Diaceton(meth)acrylamid, und die Ester der Acetylessigsäure mit den obengenannten Hydroxyalkylestern ethylenisch ungesättigter Carbonsäuren, z. B. Acetylacetoxyethyl(meth)acrylat in Betracht. Als Monomere B kommen weiterhin Verbindungen, die zwei nicht-konjugierte, ethylenisch ungesättigte Bindungen aufweisen, z.B. die Di- und Oligoester mehrwertiger Alkohole mit α,β-monoethylenisch ungesättigten C₃-C₁₀-Monocarbonsäuren wie Alkylenglykoldiacrylate- und -dimethacrylate, z.B. Ethylenglykoldiacrylat, 1,3-Butylenglykoldiacrylat, 1,4-Butylenglykoldiacrylat, Propylenglykoldiacrylat, sowie weiterhin Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Tricyclodecenyl(meth)acrylat, N,N'-Divinylimidazolin-2-on oder Triallylcyanurat in Betracht. Weiterhin sind als Monomere B auch Vinylsilane, z.B. Vinyltrialkoxysilane geeignet.

Um eine gleichmässige Verteilung des Polymerisats in der mineralischen Masse, welche die Beschichtung bildet, zu erreichen, hat es sich bewährt, wenn das Polymerisat in Form feinteiliger Partikel eingesetzt wird. Unter feinteiligen Polymerisaten versteht man solche, deren gewichtsmittlerer Teilchendurchmesser d₅₀ 10 µm und insbesondere 2 µm nicht überschreitet. Insbesondere liegt der gewichtsmittlere Teilchendurchmesser d₅₀ der Polymerisatteilchen im Bereich von 100 bis 2000 nm. Unter dem gewichtsmittleren Teilchendurchmesser d₅₀ versteht man den Teilchendurchmesser, der von 50 Gew.-% der Polymerisatteilchen unterschritten wird. Der gewichtsmittlere Teilchendurchmesser eines Polymerisats lässt sich in bekannter Weise an einer wässrigen Dipsersion der Teilchen durch quasielastische Lichtstreung oder durch Messung in einer Ultrazentrifuge bestimmen.

Polymerisate mit derartigen Teilchendurchmessern liegen in der Regel als wässrige Polymerdispersionen oder in Form von Pulvern, die aus diesen Dispersionen durch Verdampfen des Wassers erhältlich sind, vor. Zur Herstellung der erfindungsgemässen Formkörper werden daher Polymerisate in Form wässriger Polymerdispersionen, insbesondere solcher, die durch radikalische wässrige Emulsionspolymerisation der vorgenannten ethylenisch ungesättigten Monomere erhältlich sind, bevorzugt. Ebenso bevorzugt werden daraus hergestellte Polymerisatpulver sowie wässrige Dispersionen die durch Redispergieren der Polymerpulver in Wasser erhältlich sind. Verfahren zur Herstellung wässriger Polymerdispersionen als auch zur Herstellung von Polymerpulvern aus wässrigen Polymerdispersionen sind im Stand der Technik zahlreich beschrieben (siehe z.B. D. Distler, Wässrige Polymerdispersionen, Wiley VCH, Weinheim 1999; H. Warson, Synthetic Resin Emulsions, Ernest Benn Ltd., London 1972, S. 193-242). Sowohl wässrige Polymerdispersionen als auch die daraus hergestellten Pulver sind überdies kommerziell erhältlich, z.B. unter den ACRONAL®-, STYRONAL®-, BUTOFAN®- und STYROFAN®-Marken der BASF-Aktiengesellschaft, Ludwigshafen, Deutschland.

Die radikalische, wässrige Emulsionspolymerisation der Monomere M erfolgt in Gegenwart wenigstens einer oberflächenaktiven Substanz und wenigstens eines die radikalische Polymerisation auslösenden, vorzugsweise wasserlöslichen Initiators bei Temperaturen vorzugsweise im Bereich von 20 bis 120°C.

Als Initiatoren kommen Azoverbindungen, organische oder anorganische Peroxide, Salze der Peroxodischwefelsäure und Redox-Initiatorsysteme in Betracht. Vorzugsweise setzt man ein Salz der Peroxodischwefelsäure, insbesondere ein Natrium-, Kalium- oder Ammoniumsalz oder ein Redoxinitiatorsystem ein, das als Oxidationsmittel Wasserstoffperoxid oder ein organisches Peroxid wie tert.-Butylhydroperoxid und als Reduktionsmittel eine Schwefelverbindung enthält, die insbesondere ausgewählt ist unter Natriumhydrogensulfit, Natriumhydroxymethansulfinat und dem Hydrogensulfit-Addukt an Aceton.

Als oberflächenaktive Substanzen kommen die Üblicherweise für die Emulsionspolymerisation eingesetzten Emulgatoren und Schutzkolloide in Betracht. Bevorzugte Emulgatoren sind anionische und nichtionische Emulgatoren, die im Unterschied zu den Schutzkolloiden in der Regel ein Molekulargewicht unterhalb 2000 g/mol aufweisen und in Mengen von bis zu 0,2 bis 10 Gew.-%, vorzugsweise 0,5 bis 5 Gew.-%, bezogen auf das Polymerisat in der Dispersion bzw. auf die zu polymerisierenden Monomere M eingesetzt werden.

Zu den anionischen Emulgatoren zählen Alkali- und Ammoniumsalze von Alkylsulfaten (Alkylrest: C₈-C₂₀), von Schwefelsäurehalbestern ethoxylierter Alkanole (EO-Grad: 2 bis 50, Alkylrest: C₈ bis C₂₀) und ethoxylierter Alkylphenole (EO-Grad: 3 bis 50, Alkylrest: C₄-C₂₀), von Alkylsulfonsäuren (Alkylrest: C₈ bis C₂₀) und von Alkylarylsulfonsäuren (Alkylrest: C₄-C₂₀). Weitere geeignete anionische Emulgatoren finden sich in Houben-Weyl, Methoden der organischen Chemie, Band XIV/1, Makromolekulare Stoffe, Georg-Thieme-Verlag, Stuttgart, 1961, S. 192-208).

Zu den anionischen grenzflächenaktiven Substanzen zählen auch Verbindungen der allgemeinen Formel I, 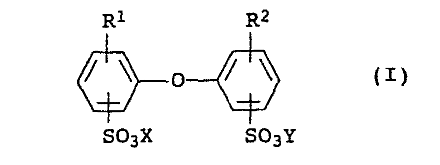 worin R¹ und R² Wasserstoff oder lineare oder verzweigte Alkylreste mit 6 bis 18 C-Atomen und insbesondere mit 6, 12 und 16 C-Atomen bedeuten, wobei R¹ und R² nicht beide gleichzeitig Wasserstoff sind. X und Y sind bevorzugt Natrium, Kalium oder Ammonium, wobei Natrium besonders bevorzugt ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen I sind allgemein bekannt, z. B. aus der US-A-4,269,749.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₉), Ethoxylate langkettiger Alkohole (EO-Grad: 3 bis 50, Alkylrest: C₈-C₃₆), sowie Polyethylenoxid/Polypropylenoxid-Blockcopolymere. Bevorzugt werden Ethoxylate langkettiger Alkanole (Alkylrest: C₁₀-C₂₂, mittlerer Ethoxylierungsgrad: 3 bis 50) und darunter besonders bevorzugt solche auf Basis von Oxoalkoholen und nativen Alkoholen mit einem linearen oder verzweigten C₁₂-C₁₈-Alkylrest und einem Ethoxilierungsgrad von 8 bis 50.

Bevorzugt werden anionische Emulgatoren, insbesondere Emulgatoren schwefelsäurehalbester ethoxilierter Alkanole sowie Emulgatoren der allgemeinen Formel I, oder Kombinationen aus wenigstens einem anionischen und einem nichtionischen Emulgator eingesetzt.

Geeignete Schutzkolloide sind beispielsweise Polyvinylalkohole, Stärke- und Cellulosederivate, Carboxylgruppen enthaltende Polymere wie Homo- und Copolymere der Acrylsäure und/oder der Methacrylsäure mit Comonomeren wie Styrol, Olefinen oder Hydroxyalkylestern, oder Vinylpyrrolidon enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden.

Selbstverständlich kann das Molekulargewicht der Polymere durch Zugabe von Reglern in einer geringen Menge, in der Regel bis zu 2 Gew.-%, bezogen auf die polymerisierenden Monomere M, eingestellt werden. Als Regler kommen insbesondere organische Thioverbindungen, ferner Allylalkohole und Aldehyde in Betracht. Bei der Herstellung der Butadien-enthaltenden Polymere der Klasse I werden häufig Regler in einer Menge von 0,1 bis 2 Gew.-%, vorzugsweise organische Thioverbindungen wie tert.-Dodecylmercaptan eingesetzt.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden. Die Monomeren können sowohl als Monomermischung als auch als wässrige Monomeremulsion der Polymerisation zugeführt werden.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419 sowie Encyclopedia of Polymer Science and Technology, Vol. 5, John Wiley & Sons Inc., New York 1966, S. 847).

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Nach Beendigung der Polymerisation werden die verwendeten Polymerdispersionen vor ihrer erfindungsgemäßen Verwendung häufig alkalisch, vorzugsweise auf pH-Werte im Bereich von 7 bis 10 eingestellt. Zur Neutralisation können Ammoniak oder organische Amine einsetzt, sowie vorzugsweise Hydroxide, wie Natriumhydroxid oder Calciumhydroxid verwendet werden.

Die Herstellung der erfindungsgemässen Formkörper kann in ähnlicher Weise wie die Herstellung von mit einer zementhaltigen Beschichtung versehenen Formkörper erfolgen, wie sie beispielsweise in GB-A 2,030,890 und DE-A 3932573 beschrieben wird. In der Regel umfasst das Verfahren zur Herstellung der Formkörper die folgenden Schritte:
1. Herstellung eines unbeschichteten Grundkörpers durch Formgebung eines zementhaltigen, plastisch verformbaren mineralischen Materials nach einem bekannten Verfahren,
2. Aufbringen einer plastischen, mineralischen Masse auf den noch feuchten Grundkörper, wobei die plastische, mineralische Masse wenigstens ein Tonmineral als Hauptbestandteil und 0,2 bis 20 Gew.-Teile, bezogen auf 100 Gew.-Teile mineralische Bestandteile, wenigstens eines in der mineralischen Masse verteiltes, filmbildendes Polymerisat, übliche Hilfsmittel und Wasser in einer Menge enthält, die eine plastische Verformbarkeit der Masse gewährleistet, und
3. Abbinden des Formkörpers.
   Die Herstellung der Gundkörper erfolgt in üblicher Weise aus fertig gemischtem Beton nach einem üblichen Formgebungsverfahren, beispielsweise durch ein Strangpreßverfahren oder durch Giessen. Ein geeignetes Strangpreßverfahren für Betondachsteine ist beispielsweise in der DE-OS 3712700 und der DE-A 39 32 573 beschrieben. Bei diesem Verfahren wird mit einer Frischbeton-Aufgabevorrichtung auf zugeführte Unterformen ein kontinuierlicher Frischbetonstrang aufgebracht, von einer Formgebungswalze und einem Glätter verdichtet und anschließend am Fuß- und Kopfrand in einer Schneidestation von einem Schneidwerkzeug zu Grundkörpern gleicher Länge geschnitten.

Der eingesetzte Frischbeton enthält neben Zement, vorzugsweise Portlandzement, übliche Zuschläge, wie Sand, Flugasche und Farbpigmente sowie gegebenenfalls übliche Verarbeitungshilfsmittel wie vorgenannt, gegebenenfalls modifizierende Polymere, z.B. die vorstehend beschriebenen hydrophoben Polymerisate und Wasser zur Erreichung einer ausreichenden Plastizität des Frischbetons für die Verarbeitung.

Sofern gewünscht, setzt man den Betonmischungen, die zur Herstellung der Grundkörper eingesetzt werden, eine wässrige Polymerdispersion, vorzugsweise eine erfindungsgemäße wässrige Polymerdispersion, in einer Menge zu, dass das Kunststoff/Zement-Gewichtsverhältnis der Betonmischung im Bereich von 1:50 bis 1:2, insbesondere im Bereich von 1:20 bis 1:5 und speziell bei etwa 1:10 liegt.

Die Verwendung von hydrophoben modifizierenden Polymerisaten in den zur Herstellung der Grundkörper verwendeten Betonmischungen führt zu Formkörpern mit erhöhter Druck- und Biegezugfestigkeit.

Auf den so hergestellten Frischbetonstrang oder auf die nach dem Zerschneiden erhältlichen frischen Betondachsteinrohlinge wird dann die erfindungsgemäß polymermodifizierte, mineralische Beschichtungsmasse aufgebracht. Das Aufbringen erfolgt nach bekannten Verfahren, beispielsweise durch Aufwalzen oder vorzugsweise durch Aufextrudieren der plastischen mineralischen Masse. Hiernach wird der so beschichtete Grundkörper in der Regel einem zweiten Schneideschritt unterworfen und anschließend einem Abbindeprozess zugeführt.

Die Herstellung der Beschichtungsmasse erfolgt in der Regel durch einfaches Vermischen bzw. Homogenisieren der Komponenten: Wasser, Tonmineral bzw. Tonmineralien enthaltende mineralische Masse und Polymerisat, die vorzugsweise in Form einer wässrigen Polymerdispersion bzw. eines wässrigen Redispergats eines Polymerpulvers eingesetzt werden. Die erforderliche Menge an Wasser liegt zur Erreichung einer für die Verarbeitung geeigneten Plastizität der Masse in der Regel bei 10 bis 30 Gew.-%, bezogen auf die mineralischen Bestandteile, und wenn eine fliessfähige Masse verarbeitet werden soll, auch darüber, z.B. bis 50 Gew.-%.

Die erfindungsgemäß mit Polymer modifizierte, tonmineralienhaltige Beschichtungsmasse bringt man in der Regel in einer Menge auf, dass die daraus resultierende mineralische Beschichtung eine Dicke aufweist, die im Bereich von 0,5 bis 15 mm liegt. In einer bevorzugten Ausführungsform der Erfindung wird die Auftragsmenge so gewählt, dass eine Schichtdicke von 1 bis 5 mm resultiert.

Das Abbinden kann sowohl bei Raumtemperatur als auch durch einen Warmhärtungsprozess bei Temperaturen im Bereich von 20 bis 150°C vorzugsweise unter Luftfeuchtigkeit erfolgen. Vorzugsweise wird das Abbinden bei 20°C bis 95°C durchgeführt, wobei auch höhere Temperaturen denkbar sind. Temperaturen oberhalb 150°C wird man in der Regel nicht anwenden, um ein ungleichmässiges Abbinden zu vermeiden. Bei Temperaturen unterhalb 10°C ist der Abbindeprozess in der Regel zu langsam um noch wirtschaftlich zu sein.

Die erfindungsgemäß polymermodizierte, tonmineralienhaltige Beschichtungsmasse kann auch auf einen bereits abgebundenen Grundkörper in der oben beschriebenen Weise aufgebracht werden. Hier können dann auch höhere Trocknungstemperaturen angwendet werden. In der Regel wird man jedoch keine Temperaturen oberhalb 250°C insbesondere oberhalb 200°C anwenden, um eine Zersetzung des Polymeren zu vermeiden. Bevorzugt wird die polymermodifizierte mineralische Beschichtungsmasse jedoch auf einen noch nicht abgebundenen Grundkörper oder auf einen Frischbetonstrang aufgebracht. Selbstverständlich kann man auch mehrere mineralische Beschichtungen auf den Grundkörper aufbringen.

Sofern das Abbinden bei erhöhter Temperatur durchgeführt wird, kömmen die üblichen Trockeneinrichtungen in Betracht wie Kammertrockner, Trommeltrockner, Schaufeltrockner und Strahlungstrockner (vgl. Ullmanns Enzyklopädie der Technischen Chemie, 3. Aufl., Bd. 17, S. 459ff).

Auf diese Weise erhält man einen Betonformkörper, der mit wenigstens einer erfindungsgemäß polymermodifizierten, tonmineralienhaltigen Beschichtung versehen ist, der im Aussehen einem Tonziegel gleicht, eine vergleichbare Witterungsbeständigkeit aufweist, hinsichtlich seiner mechanischen Festigkeit mit konventionellen Betonformkörpern vergleichbar und Formkörpern aus tonkeramischen Werkstoffen überlegen ist. Überraschenderweise ist anders als bei tonkeramischen Werkstoffen ein Brennprozess für das Erreichen der Endfestigkeit der mineralischen Beschichtung nicht erforderlich, was dieses Verfahren besonders wirtschaftlich macht.

Es hat sich als vorteilhaft erwiesen, wenn man auf die mineralische Beschichtung der erfindungsgemäßen Formkörper eine polymergebundene Beschichtung, vorzugsweise auf Basis einer wässrigen Polymerdispersion, aufbringt. Diese polymere Beschichtung kann sowohl vor als auch nach dem Abbinden in Schritt 3. aufgebracht werden. Vorzugsweise bringt man die polymergebundenen Beschichtungsmittel vor dem dem Abbinden in Schritt 3. auf und führt dann den so beschichteten Formkörper dem Abbindevorgang zu. Der Auftrag kann in an sich bekannter Weise durch Spritzen, Spachteln, Rakeln, Rollen oder Gießen erfolgen.

Als Beschichtungsmittel sind alle polymergebundene Beschichtungsmittel des Standes der Technik geeignet, die zur Beschichtung von konventionell gefertigten Betondachsteinen eingesetzt werden. Hierbei handelt es sich insbesondere um Beschichtungsmittel auf Basis wässriger Polymerdispersionen der oben genannten Polymerklassen I und III.

Die Polymere in den Beschichtungsmitteln weisen vorzugsweise eine Glasübergangstemperatur im Bereich von -20 bis +80°C und insbesondere im Bereich von 0 bis +50°C auf. Ihr molekularer Aufbau ist in der Regel mit dem der zur Modifizierung der Tonmineralien-enthaltenden Masse verwendeten Polymerisate vergleichbar.

Geeignete Beschichtungsmittel, wie sie zur Beschichtung konventionell gefertigter Betondachsteine beschrieben werden, können der EP-A 469 295, EP-A 492 210, EP 355 028, EP 383 002, EP-A 941 977, DE-A 197 49 642, DE-A 198 10 050, DE-A 40 03 909, DE-A 43 41 260 entnommen werden. Die in den vorgenannten Patentanmeldungen beschriebenen Beschichtungsmittel als auch die dort beschriebenen Beschichtungsverfahren für konventionell hergestellte Betondachbausteine können sämtlich auf die erfindungsgemäßen Formkörper übertragen werden. Insoweit wird auf die Offenbarung dieser Schriften in vollem Umfang Bezug genommen.

Die polymergebundenen Beschichtungsmittel werden in der Regel in pigmenthaltiger Form, d.h. in Form einer Farbe aufgebracht. Selbstverständlich kann man sie auch in Form einer pigmentfreien Zubereitung, d.h. in Form eines Klarlacks auf die zu beschichtende Fläche aufbringen. Pigmenthaltige Beschichtungen enthalten in der Regel zur Farbgebung Eisenoxid-Pigmente sowie übliche Füllstoffe wie Calciumcarbonat, Bariumsulfat, Talkum, etc.

Die polymergebundenen Beschichtungsmittel können in einer oder in mehreren Schichten auf die zu beschichtende Fläche des erfindungsgemäßen Formkörpers aufgebracht werden.

In einer ganz besonders bevorzugten Ausgestaltung des erfindungsgemäßen Verfahrens bringt man in einem ersten Schritt ein pigmentfreies Beschichtungsmittel auf Basis einer wässrigen Polymerdispersion, vorzugsweise einer Reinacrylat-Dispersion oder einer Styrol/Acrylat-Dispersion, auf den erfindungsgemäßen Formkörper, vorzugsweise im feuchten Zustand, auf. Auf den so mit einer polymergebundenen Beschichtung versehenen Formkörper bringt man in einem zweiten Schritt ein weiteres, polymergebundenes Beschichtungsmittel, vorzugsweise auf Basis einer Styrol/Acrylat-Dispersion oder einer Reinacrylat-Dispersion auf. Das zweite Beschichtungsmittel ist in der Regel als Farbe formuliert, d.h. es enthält Farbpigmente und gegebenenfalls Füllstoffe. In derartigen Farben liegt der Gehalt an Pigment plus Füllstoff in der Regel im Bereich von 5 bis 100 Gew.-%, bezogen auf das in der Farbe enthaltene Polymer. Auf diese Farbbeschichtung kann man weitere pigmentfreie oder pigmenthaltige Beschichtungsmittel auf Basis wässriger Polymerdispersionen oder anderer Polymere aufbringen. Sofern die zweite Polymerbeschichtung mehrere verschiedene Polymerschichten umfasst, enthält die zunächst aufgetragene zweite Beschichtung in der Regel mehr Pigment als die danach aufgetragenen weiteren Schichten.

Die Auftragsmengen der einzelnen polymeren Beschichtungsmittel werden in der Regel so gewählt, dass die erste Beschichtung ein Flächengewicht von 50 bis 500 g/m² und die zweite und weitere Beschichtungen ein Gesamtflächengewicht von 50 bis 500 g/m² aufweisen (trocken gerechnet). Die erste Beschichtung dient dabei als Primer beziehungsweise als Haftvermittler für die zweite und die weiteren Beschichtungen. Selbstverständlich kann man auch nur eine Beschichtung, die pigmentfrei oder pigmenthaltig sein kann, auf den Formkörper aufbringen, z.B. in einer Menge von 50 bis 500 g/m² (trocken gerechnet).

Die Verwendung einer pigmenthaltigen Beschichtung (Farbe) hat den Vorteil, dass der erfindungsgemäße Formkörper nicht vollständig mit Pigmenten durchgefärbt sein muss, sondern nur auf den Sichtflächen die gewünschte Färbung aufweist. Dies spart zum einen Kosten, da die Pigmentmenge, die zur Erzielung des Farbeindrucks erforderlich ist, um mehr als die Hälfte reduziert werden kann, und erhöht andererseits die Breite der möglichen Einsatzmaterialien, die zum Teil erst noch durch den Zusatz von Pigment auf die gewünschte Farbgebung eingestellt werden müssen. Überraschenderweise liess sich bislang ein Farbauftrag bei konventionellen tonkeramischen Formkörpern nicht realisieren, da die Farbe nur schlecht haftete.

Die folgenden Beispiele sollen die Erfindung verdeutlichen, sind jedoch nicht einschränkend zu verstehen.

### I. Einsatzmaterialien

Als mineralische Masse wurde eine Mischung aus einem Illithaltiger Ton mit einer Korngröße unterhalb 2 µm und Sand eingesetzt.

### Polymerisat P1

Copolymerisat aus 63 Gew.-Teilen Styrol und 32 Gew.-Teilen Butadien, 2,5 Gew.-Teilen Acrylnitril und 2,5 Gew.-Teilen N-Methylacrylamid mit einer Glasübergangstemperatur von 17°C.

Polymerisat P1 wurde in Form einer 50 gew.-%igen wässrigen Polymerdispersion eingesetzt, die mit 1 Gew.-% ethoxiliertem C₁₃-Fettalkohol und 1,5 Gew.-% des Natriumsalzes eines Schwefelsäurehalbesters von ethoxiliertem C₁₂-Alkohol stabilisiert war. Die Polymerdispersion wies eine Mindestfilmbildetemperatur von 16°C auf.

### Polymerisat P2

Copolymerisat aus 54 Gew.-Teilen Styrol und 46 Gew.-Teilen 2-Ethylhexylacrylat sowie 2,6 Gew.-Teilen Acrylsäure, 1 Gew.-Teil Acrylamid und 0,5 Gew.-Teilen Methacrylamid mit einer Glasübergangstemperatur von 12 °C in Form einer 50 gew.-%igen wässrigen Polymerdispersion mit einer Mindestfilmbildetemperatur von 20°C. Die Dispersion enthielt zur Stabilisierung 0,4 Gew.-% Nonylphenolethoxilat (Ethoxilierungsgrad 25) und 1,2 Gew.-% des Natriumsalzes des Nonylphenolethoxilat-Schwefelsäurehalbesters (Ethoxilierungsgrad 25).

### Polymerisat P3

Copolymerisat aus 62 Gew.-Teilen Styrol und 34 Gew.-Teilen n-Butylacrylat sowie 1,5 Gew.-Teilen Acrylsäure und 2,5 Gew.-Teilen N-Methylolmethacrylamid mit einer Glasübergangstemperatur von 34°C in Form einer 50 gew.-%igen wässrigen Polymerdispersion mit einer Mindestfilmbildetemperatur von 30°C.

### II. Herstellung eines Formkörpers in Form eines gewölbten Steins (Beispiele 1, 2 und 3 sowie Vergleichsbeispiele V1 und V2)

Zur Herstellung einer mineralischen Beschichtungsmasse wurden 100 Gew.-Teile des pulverförmigen Tonminerals mit 20 ml Wasser und einer definierten Menge der Polymerdispersionen P1, P2 oder P3 zu einer plastisch verformbaren Masse vermengt. Der Polymergehalt betrug 3 Gewichtsteile, bezogen auf 100 gewichtsteile mineralische Bestandteile. Für den Vergleichsversuch V1 wurde eine Beschichtungsmasse verwendet, die kein Polymerisat enthielt.

Aus einer plastischen Betonmischung, die Sand (Korngröße bis 0,3 mm), Zement und Wasser im Gewichtsverhältnis 4:1:0,4 enthielt wurde durch Strangpressen ein gewölbter Betonstrang mit einer Dicke von etwa 2 cm und einer Breite von 12 cm hergestellt. Der Scheitelpunkt der Wölbung erhob sich 4 cm über die Grundfläche. Dieser wurde mittels eines Schneidwerkzeugs in etwa 20 cm lange Betonsteinrohlinge zerteilt. Auf diese Betonsteinrohlinge wurde eine der zuvor beschriebenen mineralischen Beschichtungen in einer Stärke von ca. 3 mm aufextrudiert. Anschließend trocknet man 2 h bei 40 °C und 75 % rel. Luftfeuchte und dann 4 h bei 60 °C und 95 % rel. Luftfeuchte.

Für einen weiteren Vergleichsversuch V2 wurde in der oben beschriebenen Weise ein Betonstein mit den oben angegebenen Abmessungen hergestellt, der keine mineralische Beschichtung aufwies

### III Anwendungstechnische Prüfung

### 1. Bestimmung des Ausblühens

Nach der Trocknung legte man den Stein 7 d mit dem Gesicht auf ein 60 °C warmes Wasserbad. Der Grad der Ausblühungen wurde visuell beurteilt. Hierfür wird folgende Notenskala zugrunde gelegt. Die Ergebnisse sind in Tabelle 4 zusammengefasst.
0 = keine Ausblühungen
1 = fast keine Ausblühungen
2 = leichte Ausblühungen
3 = mäßige Ausblühungen
4 = starke Ausblühungen
5 = sehr starke Ausblühungen

### 2. Bestimmung des Glanzes

Ein nach 1. mit Wasserdampf behandelter Stein wurde hinsichtlich seines Glanzes an den Stellen beurteilt, die mit dem Wasserdampf in direktem Kontakt standen. Die Abnahme des Glanzes ist ein Mass für die Erosion der Oberfläche.
0 = sehr hoher Glanz
1 = hoher Glanz
2 = mässiger Glanz
3 = geringer Glanz
4 = matt
5 = stumpf

### 3. Haftung/Oberflächenstabilität

Ein nach 1. mit Wasserdampf behandelter Stein wurde hinsichtlich der Haftung der mineralischen Beschichtung auf dem Grundkörper und der Haftung von Dispersionsfarben auf der mineralischen Beschichtung an den Stellen beurteilt, die mit dem Wasserdampf in direktem Kontakt standen. Die Haftung der Farbe bzw. die Oberflächenstabilität der Beschichtung wurde mittels eines 10 cm langen Klebestreifens (TESA-Band) bestimmt, der mit einer Gummirolle unter leichtem Andrücken auf den Stein aufgebracht wurde. Nach einigen Minuten wurde der Klebestreifen durch kurzes Reissen wieder Entfernt. Die an dem Klebestreifen haftenden Bestandteile und ihre Menge wurden visuell nach der im Folgenden angegebenen Skala beurteilt.
0 = keine erkennbaren Bestandteile
1 = schwach erkennbar
2 = gut erkennbar
3 = auffallend
4 = stark auffallend
5 = sehr stark auffallend

**Tabelle 1**

| Bsp. | Beschichtung | Polymer | Ausblühen | Glanz | Haftung |
|---|---|---|---|---|---|
| 1 | mineralisch | P1 | 1 | 2 | 1 |
| 2 | mineralisch | P2 | 1 | 2 | 1 |
| 3 | mineralisch | P3 | 1 | 2 | 1 |
| V1 | mineralisch ohne Polymer | -- | 2 | 3 | 5 |
| V2 | keine | -- | 5 | 5 | n.b. |

### IV Formkörper mit polymergebundener Beschichtung:

Je 100 g einer handelsüblichen Dispersion auf Basis von Styrol/n-Butylacrylat (Dispersion E1, MFT von 30°C), einer Dispersion auf Basis von Methylmethacrylat/2-Ethylhexylacrylat (Dispersion E2, MFT von 28°C) und einer Dispersion E3 (aufgebaut aus 42 Gew.-Teilen n-Butylacrylat, 58 Gew.-Teilen Methylmethacrylat, 1,5 Gew.-Teilen Acrylsäure, 0,5 Gew.-Teilen Acrylamid und 1 Gew.-Teil Allylmethacrylat mit einer Glasübergangstemperatur von 38°C) wurden mit 0,5 g eines handelsüblichen Entschäumers (TEGO Foamex 825 der Fa. Th. Goldschmidt AG) und 5 g eines technischen Gemischs der Di-n-butylester der Bernstein-, Glutar- und Adipinsäure versetzt. Die so konfektionierten Dispersionen dienten als Klarlack (Pigmentvolumenkonzentration PVK = 0).

Aus der konfektionierten Dispersion E1 wurde eine Dispersionsfarbe F1 mit einer Pigmentvolumenkonzentration PVK von 40 formuliert. Zu diesem Zweck suspendierte man 235,3 g eines handelsüblichen Füllstoffs (Calciumcarbonat/Calciumsilikat) und 58,8 g Eisenoxid-Rotpigment der BAYER AG in 117,6 g Wasser. Hierzu gab man unter Rühren 588,3 g der konfektionierten Dispersionen aus E1 bzw. E2. Die so erhaltenen Farben ließ man vor ihrer anwendungstechnischen Prüfung 48 h bei Raumtemperatur reifen.

Die Farben bzw. die Klarlacke wurden mittels einer Spritzpistole auf Formkörper, die gemäss den Beispielen 1 bis 3 und den Vergleichsbeispielen V1 und V2 hergestellt wurden, vor dem Abbinden bzw. Trocknen der Formkörper auf die mit der mineralischen Beschichtung versehenen Fläche aufgebracht. Die Auftragsmenge betrug etwa 20 g/Stein bei den Steinen mit PVK 40 und etwa 10 g/Stein bei den Farben mit PVK 0. Anschließend trocknet man 2 h bei 40 °C und 75 % rel. Luftfeuchte und dann 4 h bei 40 °C und 95 % rel. Luftfeuchte.

Die anwendungstechnische Prüfung hinsichtlich Ausblühen, Glanzverlust und Farbhaftung erfolgte wie unter III beschrieben. Die Ergebnisse sind in Tabelle 2 zusammengefasst.

**Tabelle 2**

| Bsp. | mineralische Beschichtung | Farbe | Ausblühen | Glanz | Haftung |
|---|---|---|---|---|---|
| V3 | keine | F1 | 1 | 4 | 2 |
| V4 | mineralisch ohne Polymer | F1 | 1 | 4 | 5 |
| 4 | mineralisch/P1 | F1 | 1 | 4 | 2 |
| 5 | mineralisch/P2 | F1 | 1 | 4 | 2 |
| 6 | mineralisch/P3 | F1 | 1 | 4 | 2 |
| V5 | keine | E2 | 1 | 3 | 2 |
| V6 | mineralisch ohne Polymer | E2 | 1 | 2 | 5 |
| 7 | mineralisch/P1 | E2 | 1 | 2 | 2 |
| 8 | mineralisch/P2 | E2 | 1 | 2 | 2 |
| 9 | mineralisch/P3 | E2 | 1 | 2 | 2 |
| V7 | keine | E3 | 4 | 1 | 3 |
| V8 | mineralisch ohne Polymer | E3 | 1 | 1 | 5 |
| 10 | mineralisch/P1 | E3 | 1 | 1 | 2 |
| 11 | mineralisch/P2 | E3 | 1 | 1 | 2 |
| 12 | mineralisch/P3 | E3 | 1 | 1 | 2 |

## Patentansprüche

1. Formkörper, umfassend einen Grundkörper aus einem zementgebundenen mineralischen Material, das gegebenenfalls mit Polymerisaten modifiziert ist, und eine auf wenigstens einer der Hauptflächen des Grundkörpers befindliche mineralische Beschichtung aus einer polymermodifizierten mineralischen Masse, die wenigstens ein Tonmineral als Hauptbestandteil und 0,2 bis 20 Gew.-Teile, bezogen auf 100 Gew.-Teile mineralische Bestandteile der Beschichtung, wenigstens eines in der mineralischen Masse verteilten, filmbildenden, hydrophoben Polymerisats enthält.

2. Formkörper nach Anspruch 1 in Form eines Dachsteins, wobei die mineralische Beschichtung auf der als Wetterseite vorgesehenen Hauptfläche ausgebildet ist.

3. Formkörper nach Anspruch 1 oder 2, worin die Beschichtung eine Stärke von 0,5 bis 15 mm aufweist

4. Formkörper nach einem der vorhergehenden Ansprüche, worin das Polymerisat eine Glasübergangstemperatur im Bereich von -20 bis +80°C aufweist.

5. Formkörper nach einem der vorhergehenden Ansprüche, worin das Polymerisat aufgebaut ist aus ethylenisch ungesättigten Monomeren M, umfassend
- 80 bis 99,5 Gew.-% ethylenisch ungesättigten Monomeren A mit einer Wasserlöslichkeit < 60 g/l (25°C und 1 bar)
- 0,5 bis 20 Gew.-% von den Monomeren A verschiedene Monomere B,
wobei alle Angaben in Gew.-% auf 100 Gew.-% Monomere M bezogen sind und worin bis zu 30 Gew.-% der Monomere A durch Acrylnitril und/oder Methacrylnitril ersetzt sein können.

6. Formkörper nach Anspruch 5 worin die Polymerisate ausgewählt sind unter
I) Copolymerisaten, die als Monomer A Styrol und wenigstens einen C₁-C₁₀-Alkylester der Acrylsäure und gegebenenfalls einen oder mehrere C₁-C₁₀-Alkylester der Methacrylsäure einpolymerisiert enthalten;
II) Copolymerisaten, die als Monomer A Styrol und wenigstens ein konjugiertes Dien sowie gegebenenfalls (Meth)acrylsäureester von C₁-C₈-Alkanolen, Acrylnitril und/oder Methacrylnitril einpolymerisiert enthalten;
III)Copolymerisaten, die als Monomere A Methylacrylat, wenigstens einen C₁-C₁₀-Alkylester der Acrylsäure und gegebenenfalls einen C₂-C₁₀-Alkylester der Methacrylsäure einpolymerisiert enthalten;
IV) Copolymerisaten, die als Monomer A wenigstens einen Vinylester einer aliphatischen Carbonsäure mit 2 bis 10 C-Atomen und wenigstens ein C₂-C₆-Olefin sowie gegebenenfalls einen oder mehrere C₁-C₁₀-Alkylester der Acrylsäure und/oder der Methacrylsäure einpolymerisiert enthalten.

7. Formkörper nach Anspruch 5 oder 6, worin die Monomere B ausgewählt sind unter monoethylenisch ungesättigten Mono- und Dicarbonsäuren mit 3 bis 8 C-Atomen, deren Amiden, deren N-Alkylolamiden, deren Hydroxy-C₁-C₄-alkylestern und monoethylenisch ungesättigten Monomeren mit Oligoalkylenoxid-Ketten.

8. Formkörper nach einem der vorhergehenden Ansprüche, worin das Polymerisat durch radikalische wässrige Emulsionspolymerisation erhältlich ist.

9. Formkörper nach einem der vorhergehenden Ansprüche, der zusätzlich auf der mineralischen Beschichtung eine polymergebundene pigmenthaltige Beschichtung aufweist.

10. Verfahren zur Herstellung eines mit einer mineralischen Beschichtung versehenen Formkörpers gemäss einem der Ansprüche 1 bis 9, umfassend die folgenden Schritte:
1. Herstellung eines unbeschichteten Grundkörpers durch Formgebung eines zementhaltigen, plastisch verformbaren mineralischen Materials nach einem bekannten Verfahren,
2. Aufbringen einer plastischen, mineralischen Masse auf den noch feuchten Grundkörper, wobei die plastische, mineralische Masse wenigstens ein Tonmineral als Hauptbestandteil und 0,2 bis 20 Gew.-Teile, bezogen auf 100 Gew.-Teile mineralische Bestandteile, wenigstens eines in der mineralischen Masse verteilten, filmbildenden hydrophoben Polymerisats, übliche Hilfsmittel und Wasser in einer Menge enthält, die eine plastische Verformbarkeit der Masse gewährleistet, und
3. Abbinden des Formkörpers.

11. Verfahren nach Anspruch 10, **dadurch gekennzeichnet, dass** man das Abbinden bei 20°C bis 150°C durchführt.

12. Verfahren nach einem der Ansprüche 10 oder 11, **dadurch gekennzeichnet, dass** man zusätzlich auf die mineralische Beschichtung, vor oder nach dem Abbinden des Formkörpers, eine pigmenthaltige Beschichtung vor oder nach dem Trocknen des Formkörpers aufbringt.

## Claims

1. A molding comprising a base element consisting of a cement-bound mineral material, which may be modified with polymers, and a mineral coating present on at least one of the main surfaces of the base element and comprising a polymer-modified mineral material which contains at least one clay mineral as the main component and from 0.2 to 20 parts by weight, based on 100 parts by weight of mineral components of the coating, of at least one film-forming, hydrophobic polymer distributed in the mineral material.

2. A molding as claimed in claim 1 in the form of a roof tile, the mineral coating being provided on the main surface intended as the weather side.

3. A molding as claimed in claim 1 or 2, wherein the coating has a thickness of from 0.5 to 15 mm.

4. A molding as claimed in any of the preceding claims, wherein the polymer has a glass transition temperature of from -20 to +80°C.

5. A molding as claimed in any of the preceding claims, wherein the polymer is composed of ethylenically unsaturated monomers M, comprising
- from 80 to 99.5% by weight of ethylenically unsaturated monomers A having a water solubility of < 60 g/l (25°C and 1 bar)
- from 0.5 to 20% by weight of monomers B differing from the monomers A,
all data in % by weight being based on 100% by weight of monomers M and it being possible for up to 30% by weight of the monomers A to be replaced by acrylonitrile and/or methacrylonitrile.

6. A molding as claimed in claim 5, wherein the polymers are selected from
I) copolymers which contain, as monomer A, styrene and at least one C₁-C₁₀-alkyl ester of acrylic acid and, if required, one or more C₁-C₁₀-alkyl esters of methacrylic acid as polymerized units;
II) copolymers which contain, as monomer A, styrene and at least one conjugated diene and, if required, (meth)acrylates of C₁-C₈-alkanols, acrylonitrile and/or methacrylonitrile as polymerized units;
III)copolymers which contain, as monomer A, methyl acrylate, at least one C₁-C₁₀-alkyl ester of acrylic acid and, if required, a C₂-C₁₀-alkyl ester of methacrylic acid as polymerized units;
IV) copolymers which contain, as monomer A,_at least one vinyl ester of an aliphatic carboxylic acid of 2 to 10 carbon atoms and at least one C₂-C₆-olefin and, if required, one or more C₁-C₁₀-alkyl esters of acrylic acid and/or of methacrylic acid as polymerized units.

7. A molding as claimed in claim 5 or 6, wherein the monomers B are selected from monoethylenically unsaturated mono- and dicarboxylic acids of 3 to 8 carbon atoms, their amides, their N-alkylolamides, their hydroxy-C₁-C₄-alkyl esters and monoethylenically unsaturated monomers having oligoalkylene oxide chains.

8. A molding as claimed in any of the preceding claims, wherein the polymer is obtainable by free radical aqueous emulsion polymerization.

9. A molding as claimed in any of the preceding claims, which additionally has a polymer-bound pigment-containing coating on the mineral coating.

10. A process for the production of a molding provided with a mineral coating, as claimed in any of claims 1 to 9, comprising the following steps:
1. production of an uncoated base element by shaping a cement-containing, plastically deformable mineral material by a known method,
2. application of a plastic, mineral material to the still moist base element, the plastic, mineral material containing at least one clay mineral as the main component and from 0.2 to 20 parts by weight, based on 100 parts by weight of mineral components of the coating, of at least one film-forming, hydrophobic polymer distributed in the mineral material, conventional assistants and water in an amount which ensures plastic deformability of the material, and
3. setting of the molding.

11. A process as claimed in claim 10, wherein the setting is carried out at from 20 to 150°C.

12. A process as claimed in either of claims 10 and 11, wherein a pigment-containing coating is additionally applied to the mineral coating, before or after setting of the molding and before or after drying of the molding.

## Revendications

1. Corps moulé comprenant un corps principal constitué d'une matière minérale liée par un ciment, qui est éventuellement modifiée avec des polymères, et d'un revêtement minéral, se trouvant sur au moins une des surfaces principales du corps principal, constitué d'une masse minérale modifiée avec des polymères, qui contient au moins un minéral argileux en tant que composant principal et 0,2 à 20 parties en poids, par rapport à 100 parties en poids des composants minéraux du revêtement, d'au moins un polymère filmogène hydrophobe réparti dans la masse minérale.

2. Corps moulé selon la revendication 1 sous forme de tuile, dans lequel le revêtement minéral est réalisé sur la surface principale prévue en tant que face exposée aux agents atmosphériques.

3. Corps moulé selon la revendication 1 ou 2, dans lequel le revêtement présente une épaisseur de 0,5 mm à 15 mm.

4. Corps moulé selon l'une quelconque des revendications précédentes, dans lequel le polymère présente une température de transition vitreuse allant de -20°C à +80°C.

5. Corps moulé selon l'une quelconque des revendications précédentes, dans lequel le polymère est composé de monomères M à insaturation éthylénique comprenant
- 80% à 99,5% en poids de monomères A à insaturation éthylénique présentant une hydrosolubilité inférieure à 60 g/L (à 25°C et sous une pression de 1 bar)
- 0,5% à 20% en poids de monomères B différents des monomères A,
dans lesquels toutes les proportions exprimées en % en poids se rapportent à 100% en poids de monomères M et jusqu'à 30% en poids des monomères A peuvent être remplacés par l'acrylonitrile et/ou le méthacrylonitrile.

6. Corps moulé selon la revendication 5, dans lequel les polymères sont choisis parmi
I) des copolymères qui contiennent sous forme polymérisée, en tant que monomère A, du styrène et au moins un ester alkylique en C₁ à C₁₀ de l'acide acrylique et éventuellement un ou plusieurs esters alkyliques en C₁ à C₁₀ de l'acide méthacrylique ;
II) des copolymères qui contiennent sous forme polymérisée, en tant que monomère A, du styrène et au moins un diène conjugué ainsi qu'éventuellement des ester (méth)acryliques d'alcanols en C₁ à C₈, de l'acrylonitrile et/ou du méthacrylonitrile ;
III) des copolymères qui contiennent sous forme polymérisée, en tant que monomère A, au moins un ester alkylique en C₁ à C₁₀ de l'acide acrylique et éventuellement un ester alkylique en C₂ à C₁₀ de l'acide méthacrylique ;
IV) des copolymères qui contiennent sous forme polymérisée, en tant que monomère A, au moins un ester vinylique d'un acide carboxylique aliphatique possédant 2 à 10 atomes de carbone et au moins une oléfine en C₂ à C₆ ainsi qu'éventuellement un ou plusieurs esters alkyliques en C₁ à C₁₀ de l'acide acrylique et/ou de l'acide méthacrylique.

7. Corps moulé selon la revendication 5 ou 6, dans lequel les monomères B sont choisis parmi des acides mono- et di-carboxyliques à insaturation monoéthylénique possédant 3 à 8 atomes de C, leurs amides, leurs N-alkylolamides, leurs esters hydroxy(alkyliques en C₁ à C₄) et des monomères à insaturation monoéthylénique contenant des chaînes d'oligo(oxyde d'alkylène).

8. Corps moulé selon l'une quelconque des revendications précédentes, dans lequel le polymère peut être obtenu au moyen d'une polymérisation en émulsion aqueuse par voie radicalaire.

9. Corps moulé selon l'une quelconque des revendications précédentes, qui présente en outre sur le revêtement minéral un revêtement contenant des pigments lié par un polymère.

10. Procédé de fabrication d'un corps moulé pourvu d'un revêtement minéral selon l'une quelconque des revendications 1 à 9, comprenant les étapes suivantes consistant à :
1. fabriquer un corps principal non revêtu en façonnant une matière minérale déformable de manière plastique et contenant un ciment selon un procédé connu,
2. déposer une matière minérale plastique sur le corps principal encore humide, la masse minérale plastique contenant au moins un minéral argileux en tant que composant principal et 0,2 à 20 parties en poids, par rapport à 100 parties en poids des composants minéraux, d'au moins un polymère filmogène hydrophobe réparti dans la masse minérale, des adjuvants habituels et de l'eau dans une quantité telle qu'une déformation plastique de la masse est assurée et,
3. faire durcir le corps moulé.

11. Procédé selon la revendication 10, **caractérisé en ce que** l'on réalise la prise à une température allant de 20°C à 150°C.

12. Procédé selon l'une quelconque des revendications 10 ou 11, **caractérisé en ce que** l'on dépose en outre sur le revêtement minéral, avant ou après la prise du corps moulé, un revêtement contenant des pigments, avant ou après le séchage du corps moulé.
